# EUROPEAN PATENT SPECIFICATION

(11) **EP 3 313 020 B1**
(45) Date of publication and mention of the grant of the patent: **30.12.2020**
(21) Application number: 17198146.7
(22) Date of filing: 24.10.2017
(51) Int. Cl.: H04L 9/32, H04L 29/06, H04L 29/08

(54) **METHOD OF DIGITAL IDENTITY GENERATION AND AUTHENTICATION**
VERFAHREN ZUR ERZEUGUNG UND AUTHENTIFIZIERUNG EINER DIGITALEN IDENTITÄT
PROCÉDÉ DE GÉNÉRATION ET D'AUTHENTIFICATION D'UNE IDENTITÉ NUMÉRIQUE

(30) Priority: 24.10.2016 IT 201600106953
(43) Date of publication of application: 25.04.2018
(73) Proprietor: Aliasnet S.R.L., 46100 Mantova (IT)
(72) Inventor: LO CASTRO, Aldo Peter, London E20 1FQ (GB)
(74) Representative: Lisa, Elisabetta

(56) References cited:
- CN-A- 104 717 070
- US-A1- 2008 095 360
- US-B1- 6 826 687
- Georg Becker: "Merkle Signature Schemes, Merkle Trees and Their Cryptanalysis", , 8 July 2008 (2008-07-08), XP055312001, Retrieved from the Internet: URL:http://www.emsec.rub.de/media/crypto/a ttachments/files/2011/04/becker_1.pdf [retrieved on 2016-10-19]

## Description

### Field of application of invention

The present invention relates to the field of algorithms for the generation and authentication of a digital identity. Such methods are widely used for the secure identification of a user accessing to an online banking or government service or for the digital signing of an electronic document.

### State of the art

A digital identity means the association of a public/private key pair with the personal data of a subject (a person, a company, a computer, etc.).

Asymmetrical cryptography algorithms, or public/private key cryptography, is a type of cryptography where each signing subject has an associated a pair of keys:
The public key, which must be shared;
The private key, held solely by the signing subject.

This technique is said to be "asymmetric", as opposed to the "symmetric" technique that requires exchanging a single signature key.

According to this solution, only the public key is shared, which only enables the decoding of encrypted data. The mechanism is based on the fact that, if one of the two keys is used to encrypt (or encode) a message, then the latter can only be decoded by the other key.

In asymmetric cryptography, the unambiguous association of a pair of keys, or "key pair", to a subject takes place via a digital certificate. This certificate is provided by a trusted third-party authority known as the certification authority (CA) .

Although this scheme is considered strong, the computational capacity of modern computers is such as to be able to reconstruct a private key from a public key within a time that has almost become reasonable.

To overcome this problem, the known art contemplates assigning a public/private key pair to a user for an increasingly shorter time interval.

In any case, this entails the issue of a digital certificate on every key pair assignment.

Georg Becker: "Merkle Signature Schemes, Merkle Trees and Their Cryptoanalysis" discloses the implementation of a Merkle Tree construed on the public keys of a set of couples public/private keys to check the authenticity of a message signed with one couple on which the Tree is construed.

US6826687 discloses a scheme for generating a TCS-commitment suitable to be implemented on multicast and other scenarios requiring fast digital signature for E-Commerce protocols. According to US6826687 a hybrid scheme is implemented including 1-time and k-time signature couples, wherein the 1-time couples are used to construe a Merkle tree, whose root identifies a k-time signature couple.

In addition, US6826687 discloses the generation of a certificate including said Merkle root and a regular signature on the root itself.

### Summary of invention

The object of the present invention is to improve the strength of a digital identity based on an asymmetric encryption scheme.

The basic idea is that of simultaneously associating a plurality of public/private key pairs with a user.

The user uses one private key at a time to encrypt data and does not reveal a related public key, but all the public keys simultaneously contribute to identifying the user.

The basic idea is to construct a so-called Merkle root on the hashes of the public keys that is unambiguously associated with said user.

In addition to providing the public key complementary to the private key in use, the user also provides the hashes in the Merkle tree complementary to the public key in use.

A verification authority that wishes to verify the user's identity saves the associated Merkle root of these and when it receives the public key and the hashes of the public keys complementary to the public key in use, it recalculates the

Merkle root and compares it with the previously stored one. If they match, then the user's identity has been verified.

Preferably, these complementary hashes in the Merkle tree are supplied to the verification authority in a correct order so that the Merkle root can be recalculated correctly.

Any type of data can be subjected to asymmetric encryption, for example an alphanumeric string that enables establishing secure communication on a web portal, or an electronic document that is to be digitally signed.

Thus, the verification authority not only checks whether the previously encoded data is effectively decrypted by the public key supplied by the user, but also checks that the reconstructed Merkle root corresponds to that stored at the user subscription stage.

An unambiguous logical link, involving the public key in use and the hashes and their combinations constructed on all the public keys not in use, is advantageously created between a Merkle root and the encryption of any data.

Advantageously, holding the Merkle root of the public keys is not the same as publishing the individual public keys of the user generated in the relevant service subscription stage, which thus remain secret until used.

Advantageously, the user can abandon the use of a private key, passing to a still unused private key without having to request the issue of a new digital certificate from the platform managing the digital identity.

Advantageously, the Merkle root can be constructed not only on a tree of public keys but also of pseudo-public keys, namely "individual" strings for which there is no corresponding private key.

The advantage of this is that the Merkle root is wider and more robust without assigning an excessively large number of public/private key pairs to a user.

A further advantage of the invention is that the public/private key pairs can be generated in a distributed manner, such as, for example, by an APP installed on a user device, while only the Merkle root calculated from the associated public keys is kept by the verification authority.

The verification authority may or may not coincide with the user subscription platform used for obtaining the digital identity forming the subject of the present invention. Obviously, the Merkle root together with a minimal set of user data must be sent by the subscription platform to the verification authority, which can then check the user's digital identity in any procedure that contemplates asymmetric encryption of a document by means of a computer device used by the user.

The Merkle tree concept is in itself known and was invented by Ralph Merkle who conceived the concept in 1979, while the Hashcash Proof of Work that was proposed by Adam Back in 1997.

According to a preferred variant of the invention, the assignment of said plurality of key pairs to the user is recorded in a transaction on a blockchain.

According to another preferred aspect of the invention, the signing of an electronic document is also saved on a first blockchain and so-called anchoring of said first blockchain is cyclically performed on a second blockchain.

### Brief description of figures

Further objects and advantages of the present invention will become clear from the detailed description that follows of an embodiment thereof (and its variants) and from the accompanying drawings provided purely by way of non-limitative example, in which:
- Figure 1 shows the construction of a Merkle tree and the associated Merkle root from a set of public keys associated with a user;
- Figure 2a shows an example of a tree constructed on the basis of Figure 1 where the selected public key is public key 5; in this figure, the coordinates of each node of the tree, corresponding to a matrix that contains the respective values, are explicitly indicated; Figure 2b contains a corresponding listing useful for computing the set of complementary hashes of a predetermined hash;
- Figure 3 shows an example of data organisation in a private database by a platform that provides the main identity according to one embodiment of the present invention;
- Figure 4 shows respective flow charts of two possible user subscription procedures for obtaining a digital identity according to the present invention, which share some common flow chart steps;
- Figure 5 shows a possible procedure of using a public/private key pair based on the method of recording a digital identity according to the present invention;
- Figure 6 shows a flowchart of an example of a method for verifying that the public/private keys belong to those generated and saved in the registration stage;
- Figure 7 shows a hardware-software platform that can be used for implementing the method forming the subject of the present invention; and

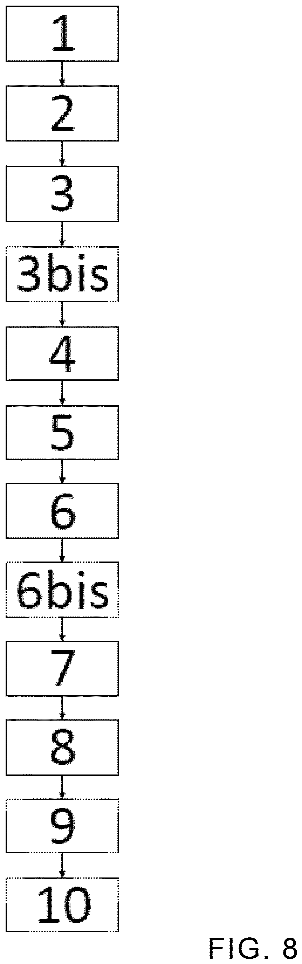

- Figure 8 shows, by means of a flowchart (steps 1 - 10), an example of implementation of the method forming the subject of the present invention.

The same reference letters and numerals in the figures identify the same elements or components.

### Detailed description of embodiments

In this description, a person or legal entity that uses a service of digital identity, for example, for signing an electronic document or establishing communication on a secure channel (SSL) or other uses, is hereinafter called a "user".

The term "IdSign" indicates a hardware-software platform designed to manage the generation and, possibly, a verification of a digital identity of a user. As will be seen further on, IdSign can directly generate and assign a plurality of public/private key pairs to a user who subscribes to a service of digital identity assignment or can manage the generation by means of an APP installed on a smartphone used by the user, which locally generates this plurality of key pairs and only returns the Merkle root, obtained on the basis of at least the public keys of the plurality of key pairs, to IdSign.

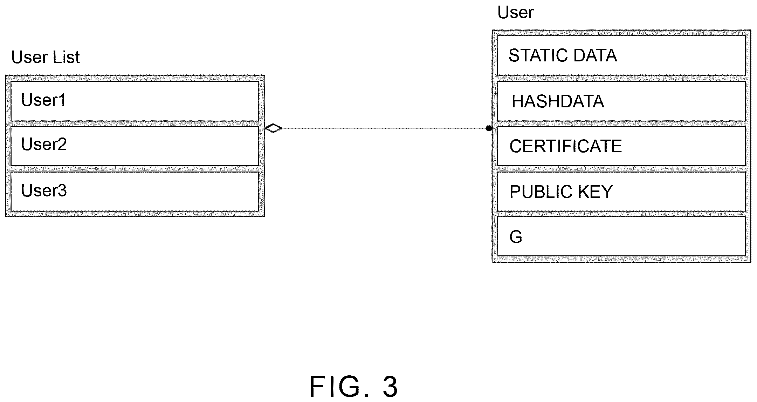

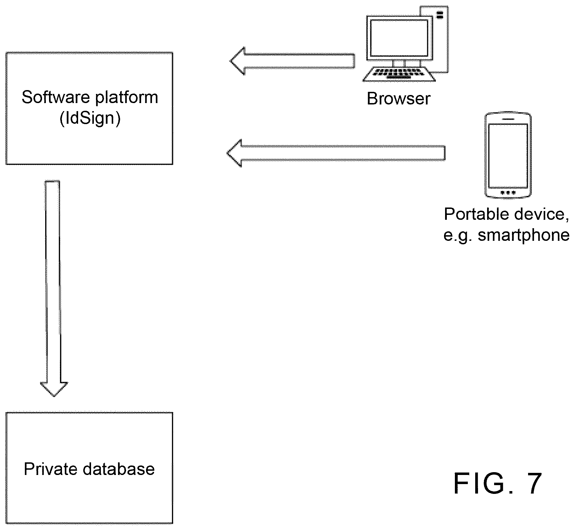

Preferably, IdSign is also enabled to perform transactions on a blockchain or on a private database, for example as show in Figures 3 and 7, to store at least:
- information related to the user, and
- information directly and/or indirectly related to the plurality of public/private key pairs assigned to the user.

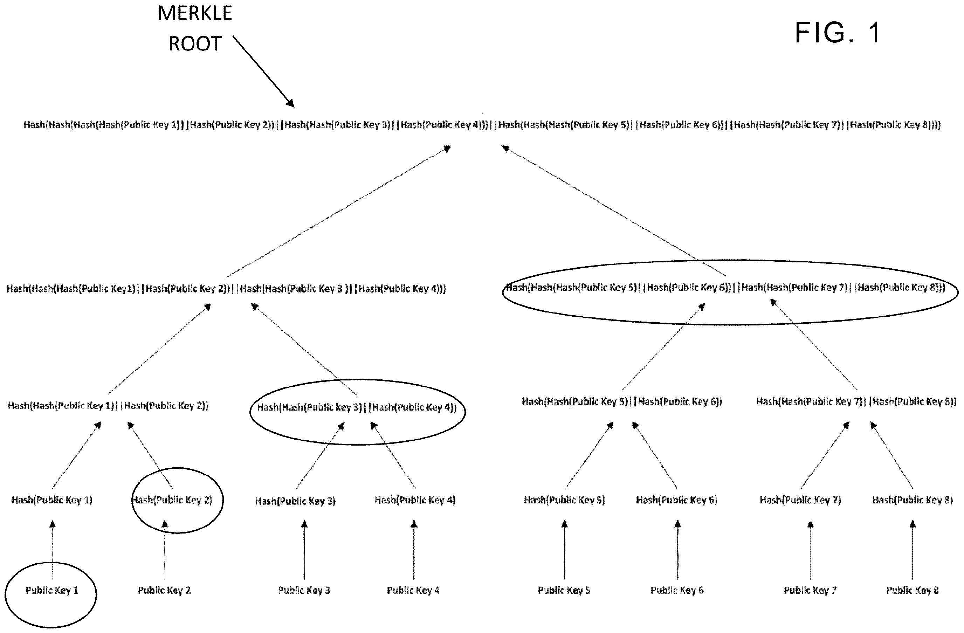

The present invention is based on the Merkle tree concept, illustrated in Figure 1. In other words, a Merkle root is calculated on a predetermined number of alphanumeric strings according to a tree structure of hash concatenations of underlying levels.

The bottom level corresponds to alphanumeric strings, some of which can be public keys of the plurality of keys assigned to the user.

Each level of the tree comprises nodes obtained from the hash operation on the concatenation of strings corresponding to two nodes of a preceding level.

The top of the tree consists in the aforementioned Merkle root.

An example is shown in Figure 1 of how a Merkle tree is created starting from 8 alphanumeric strings, which for the moment are all assumed to correspond to the public keys assigned in public/private pairs to a user.

The hash is calculated for each one of these and, for clarity, is indicated as the "first-level hash". The first-level hashes are then concatenated (computer symbol |, double "pipe") two by two and a "second-level hash" of each concatenation is calculated, and so on until a single hash is obtained, which is the so-called Merkle root, indicated by "Z". Other methods of Merkle tree construction can be identified.

It should be noted that for 8 alphanumeric strings, three levels (8 = 2³) plus a hash level are obtained, where the fourth level corresponds to the Merkle root.

It is important to point out that the Merkle root can be easily recalculated starting from knowing one of the alphanumeric strings that define the base of the tree and correspond to the public keys and a hash set complementary to this data item.

In this description, a public key is indicated as being "complementary" or "corresponding" to a private key and vice versa when they form an asymmetric encryption pair.

Furthermore, a public key is indicated as being "complementary" to the other public keys assigned to a same user at the stage of assigning a plurality of key pairs according to the present invention. An expert in the art is able to immediately understand what is meant by "complementary" from the context in which the term is used.

For example, in Figure 1, a public key (level 0) with number 1 is circled: "public key 1" (with index 0). In addition, all the complementary hashes to key number 1 necessary for recalculating the Merkle root are also circled.

Preferably, the keys generated in the user subscription stage are indexed according to a certain order and the complementary hashes are associated on the basis of their index value; for example, those shown circled in Figure 1 relate to the first public key "public key 1".

A Merkle tree enables computing the Merkle root with a number of steps proportional to the binary logarithm log₂n, where n is the number of elements that constitute the base of the tree, which in this case are the 8 public keys of the 8 cryptographic key pairs. Thus, as shown in Figure 1, starting from the first public key of 8 in total, it is sufficient to supply only another 3 hashes (8 = 2³) to calculate the Merkle root.

It is possible to recalculate the Merkle root once these four data items have been obtained: a public key + 3 hashes (a first-level one, a second-level one and a third-level one).

It is also important that it is clearly indicated whether each hash is right or left, since hash(A||B) is different from hash(B||A).

Therefore, if the verification authority of a digital identity knows said Merkle root corresponding to said user, then, upon receiving from said user:
- data encrypted with a private key,
- a public key complementary to said private key used for encrypting said data, and
- a hash set complementary to said public key complementary to said private key, i.e. from selecting the hashes of a Merkle tree, in turn, constructed from all the user's public keys,
the verification authority can proceed to decode the encrypted data with said public key and simultaneously recalculate the Merkle root and compare it with the one previously stored and associated with said user.

The decoding (Step 9) and the verification of the content of said data is optional and can be useful for further objects of the invention.

If the recalculated Merkle root corresponds to that stored, the user is securely verified. In addition, the verification authority decrypts the data encrypted with said public key and, if it possesses a decrypted copy, compares them with one another. This is particularly useful when the user must encrypt an alphanumeric string to obtain secure communication, for example over an SSL channel, with a secure Web platform.

According to a preferred embodiment of the present invention, the alphanumeric strings on which the Merkle root is constructed might not all be public keys corresponding/complementary to a private key.

For example, 15 public/private key pairs could be generated together with one "individual" string necessary to construct the Merkle tree according to a power of 2, in this case 2⁴. Alternatively, with 15 key pairs, 49 individual strings could be generated to obtain 2⁸.

The number of "true" public keys could be less than the "individual" strings; for example, generating a Merkle tree with 64 (2⁸) strings at level 0, in which only a few of them are true public keys, i.e. public keys effectively corresponding to a private key useful for asymmetric data encryption.

This allows making the present method much stronger.

Furthermore, the true public keys can be randomly indexed, i.e. so that only the user - the APP used by the user - knows which ones are effectively true public keys rather than individual strings. This makes the digital identity stronger, even from possible hacker attacks against the IdSign platform. According to preferred embodiments of the present invention, registration of the user on the IdSign platform takes place via the Web, while according to another preferred variant of the invention, registration takes place via an application (APP) installable on a smartphone or computer of the user.

H is the set of all the first, second, ..., n'th level hashes, and G indicates the set of complementary hashes of a predetermined public key, as shown in Figure 1.

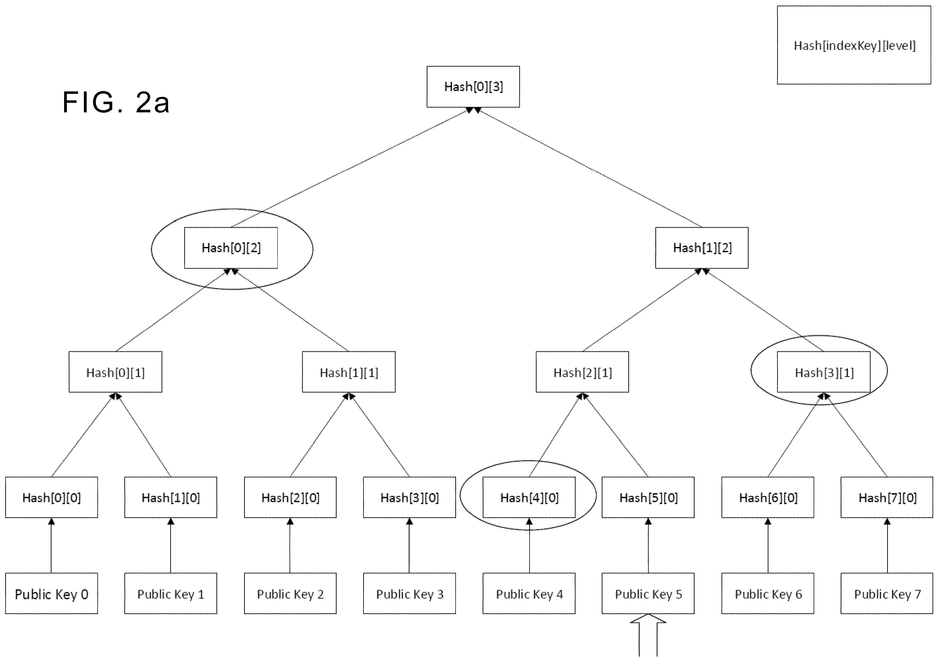

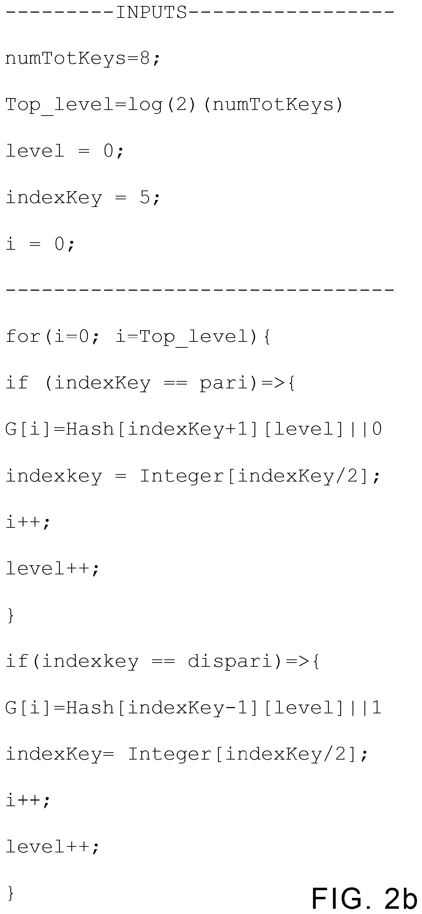

The algorithm for obtaining this set G is that set out in the listing in Figure 2b, built on the example in Figure 2a, in which the public key in use is public key 5.

In the same listing, the symbol "=>" means "then" in computer language.

The following notation is used in this figure:
- Hash[Index][Level] indicates a matrix containing all the public keys and all the hashes of the Merkle tree. This matrix therefore only partially corresponds to the above-described set H. "Index" represents the position from left to right in Figure 1, while Level represents the row, moving bottom-up. For example, in Figure 1, the highest circled hash to the right of the page is indicated by Hash[2][4]; it should be borne in mind that counting in an array normally starts from position "0", and so this hash is more correctly in position Hash[1][3];
- numTotKeys represents the total number of public keys generated by the App in the user subscription stage, which is 8 in the example, while
- Top_level is calculated from numTotKeys through the related binary (base-2) logarithm;
- "G" is an ordered list in which the hashes of the Merkle tree are collected according to incremental values of "Index" and "Level"; and
- indexKey represents the index of the public key in use and acquired at the start of execution of the listing.

The listing is basically divided into two sections: a right section and a left section. In order to obtain the correct concatenation, a "0" or "1" is concatenated to each hash acquired from the hash matrix according to its position in the tree.

Therefore, Hash(PublicKey2) must be concatenated to the right of the hash of the first public key PublicKey1 and therefore a "0" is concatenated to its hash.

Similarly, Hash[2][1] must be concatenated to the right and therefore a "0" is concatenated when copying it from the Hash matrix to list G.

If instead of selecting the first public key, the second one is chosen, then the second section of the listing (indexKey is odd) would be executed, and so a "1" would be concatenated to the hash of PublicKey1 acquired from Hash matrix.

Due to this strategy, operations are much simpler when processing list G.

In fact, it is sufficient to start from the first item of list G and right or left concatenate according to the last digit "0" or "1" of the hash of the public key in use. After this concatenation, a new hash of the concatenation is calculated and appended to the right or the left of the second item of list G and so on.

This algorithm remains completely unchanged when "individual" strings are employed for widening the base of the Merkle tree.

The listing in Figure 2a and the corresponding flowchart in Figure 2b are entirely optional. An expert in the art may use any programming method for extracting from the Hash matrix the set G of complementary hashes of the public key in use.

The method forming the subject of the present invention basically consists of two stages:
- generating and assigning a digital identity to said user and
- verifying said digital identity comprising the following steps in succession.

The first stage comprises the following steps in succession:
- (Step 1) simultaneously assigning a plurality of public/private key pairs to said user;
- (Step 2) constructing a Merkle tree having at least said plurality of public keys as elements of a related bottom level;
- (Step 3) computing a hash set (H) in which each item corresponds to each of the nodes of said Merkle tree, including a related first Merkle root (Z); and
- (Step 4) storing said Merkle root (Z) and linking it to a data set related to said user.

The second stage comprises the following steps in succession:
- (Step 5) encrypting predetermined data with a first private key of said plurality of pairs;
- (Step 6) selecting a hash subset (G) corresponding to the nodes of said Merkle tree complementary to a first public key corresponding to said first private key;
- (Step 7) computing a second Merkle root from said hash subset (G) and from said first public key; and
- (Step 8) verifying that said first Merkle root coincides with said second Merkle root.

### Service subscription and key generation

Two preferred variants of the method of IdSign user subscription are described below.

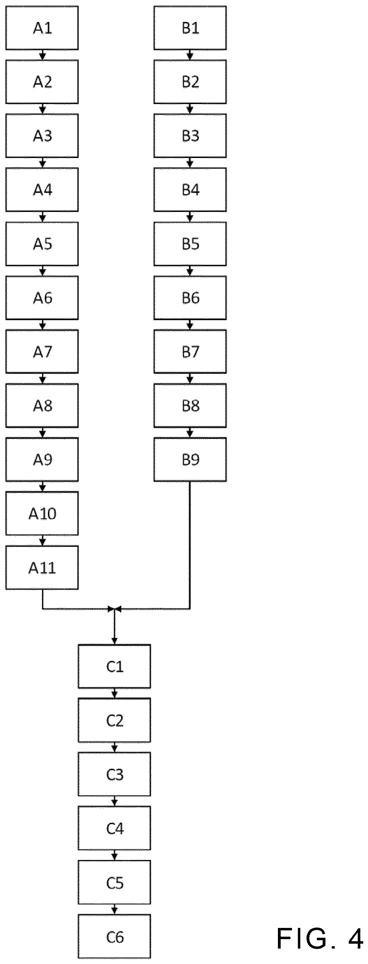

According to a first preferred variant, referring to Figure 4, subscription requires use of the Web and the installation of an APP on the smartphone of the subscribing user.
A1. The user is identified with the aid of a human operator who personally, or via videoconference or via a selfie sent by the user, verifies the identity of the subscribing user;
A2. The human operator acquires an email address and a mobile phone number from the user and transmits them to IdSign;
A3. IdSign generates and provides the user, through the human operator for example, with a Web activation code, sends a mail containing a link to the address given by the user, and sends an SMS with a so-called App code to the user's mobile phone; A4. When the user opens said link, they are asked enter said Web code received from the human operator;
A5. If the Web code received via the web page is correct, then IdSign generates an encrypted string, for example a QR-Code, displays it on the screen of the user's device or the human operator's computer, and asks the user to download an IdSign complementary App. This encryption can be performed using any algorithm, using either symmetrical or asymmetrical cryptography, or other known methods;
A6. During installation of the App, the App code received via SMS for unlocking the App is requested;
A7. In addition, the App asks the user to specify a user identification method for the App, for example via a PIN created by the user, and/or allow the App to acquire a biometric parameter, such as a fingerprint or an iris scan of the user, via a sensor of the phone;
A8. Successively, the App asks the user for the encrypted string provided via web, for example by scanning the QR-Code or manually entering the encrypted string;
A9. The App uses the previously entered App code to decode this string;
A10. The App then sends the decoded string to IdSign, in a complementary manner to the encryption previously executed in step A5;
A11. IdSign analyses the decoded string received and if it is correct, it considers the subscription as having been successful.

A second preferred method of subscription, referring to Figure 4, contemplates the following steps through just the use of an IdSign complementary App to be installed on the user's portable device, for example a smartphone:
B1. Download and installation of the IdSign complementary App;
B2. The App asks the user to enter their personal data, including phone number and email address;
B3. The App communicates the subscription to IdSign, which sends an email and an SMS to the address/number provided by the subscribing user so that the user receives a Web code and an App code, as described in the previous procedure;
B4. The App asks the user to enter both of the codes received via email and SMS and, if necessary, requests further personal data from the user;
B5. The App sends the Web code entered by the user to IdSign; B6. If the Web code received is correct, IdSign returns an encrypted string to the App as in step A5;
B7. In addition, the App asks the user to specify a user identification method for the App, for example via a PIN created by the user, and/or allow the App to acquire a biometric parameter, such as a fingerprint or an iris scan of the user, via a sensor of the portable device;
B8. The App decodes said encrypted string with the App code and sends this decoded string to IdSign as in step A10;
B9. IdSign analyses the decoded string received and if it is correct, it considers the subscription as having been successful.

For both modes, the Web and App codes and the encrypted string are temporary and therefore will no longer be used in the future transactions of that subscribing user.

Independently of the subscription method employed, once IdSign has acquired the data and certified communication channels to the subscribing user, it performs the following steps in succession, fundamental for "completion of registration" of the user:
C1. Generation and storage of N pairs of public/private keys, in a preferably static memory of the portable device on which the APP is installed;
C2. Combination of the public keys by means of a Merkle tree, identifying the Merkle root, indicated as Z for brevity, as a result of this algorithm, and transmission of Z to IdSign;
C3. IdSign computes the hash of the concatenation of the user's "static" personal data (e.g. first name, last name, tax code, and date and place of birth), obtaining the so-called HASHDATA;
C4. IdSign issues a certificate in which it has inserted the static user data and Z;
C5. IdSign updates the private database, storing the following in a mutually related manner:
   - one or more items of the user's "static" personal data in addition to other possible data,
   - the certificate;
   - the HASHDATA
C6. The App stores the following in the memory of the portable device on which it is installed:
   - the pairs of public and private keys,
   - the HASHDATA,
   - the hash set H that forms the Merkle tree created starting from the public keys.

According to a preferred variant of the invention, instead of issuing a certificate, as described in step C4, IdSign inserts the pair formed by the HASHDATA and Z inside a transaction in a blockchain. In this way, the association is rendered unchangeable.

### Use of a key pair via a transaction recording service

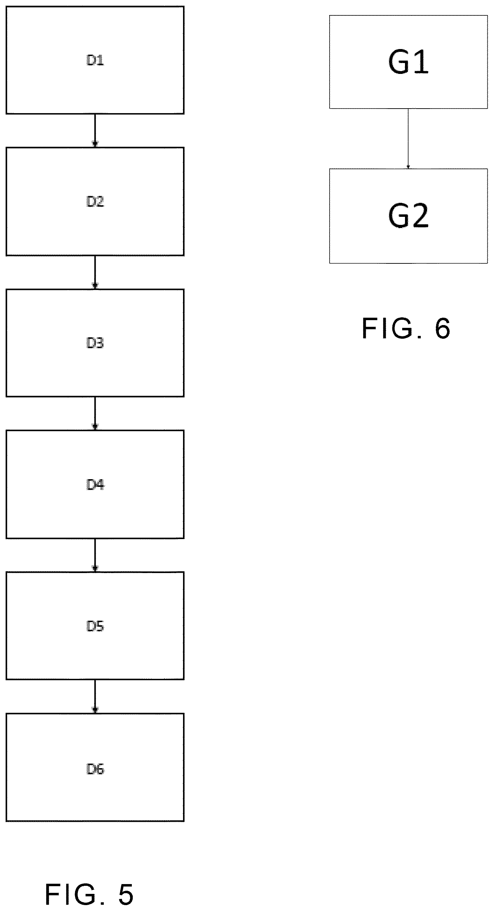

An example of a procedure for using a key pair obtained via the above-described subscription service is described below, with reference to Figure 5.
D1. The App asks user to enter their PIN, acquired in the subscription step, or enable the App through the acquisition of biometric user data;
D2. Once the App is enabled, it selects a private key from those available in the memory of the portable device and uses the private key to encrypt the data;
D3. The App sends the public key complementary to the private key used for said encryption and the encrypted data to IdSign;
D4. The App selects G, i.e. those subsets of the hashes defining H that are complementary to the public key corresponding to the private key used for said encryption and which enable recalculation of the Merkle root Z, which is inserted in the certificate or transaction created by IdSign in the user subscription stage.
D5. The App sends the HASHDATA and G to IdSign;
D6. IdSign updates the private database, storing the following data items and establishing a link between them and the data acquired in the registration stage (HASHDATA, certificate and static user data):
   - G;
   - said public key corresponding to the private key used;
   - the encrypted data.

Thanks to present invention, the possibility of tracing ownership of each of the key pairs used back to the user without having ever previously revealed the relevant public key is guaranteed, thereby increasing the security of the user's digital identity.

### Checking that a key pair belongs to a user via the transaction recording service

A procedure for verifying that a key pair belongs to a user is described below, with reference to Figure 6.
G1. The User table associated with the subscriber is extracted from the private database by means of, for example, the HASHDATA string, using it as a query key, see Figure 3. The following is then obtained:
   - static user data;
   - the digital certificate containing Z;
   - the public key corresponding to the private key used by the user;
   - the hash set G, complementary to the public key used in the encryption step;
G2. Z is calculated using the public key and the hash set G, and it is checked that it corresponds to the value retrieved in the previous step.

Figure 7 shows an example of a hardware and software infrastructure configured to perform at least one of the described procedures. Communications between the App and IdSign and between IdSign and the server group where SC is implemented and the server group where AC is implemented are preferably by means of the IP communication protocol combined with, for example, HTTP or other application-level protocols.

It is important to underline that the verification procedure of a public key belonging to a predetermined user can be implemented independently of the fact of using a certificate, or the fact of using a blockchain. In fact, the data stored in the user subscription stage, including the static user data, Z, and the HASHDATA, can be stored and handled by a third-party authority. Advantageously, since Z remains stored with the verification authority together with the user's data, autonomous generation of public/private key pairs by the App and secure verification of the identity of the legitimate holder of that public key is made possible.

The present invention can be advantageously implemented by means of a computer program that comprises encoding means for implementing one or more steps of the method, when this program is executed on a computer. Therefore, it is understood that the scope of protection extends to said computer program and also to computer-readable means that comprise a recorded message, said computer-readable means comprising program-coding means for implementing one or more steps of the method, when said program is executed on a computer.

Variants with respect to the non-limitative example described are possible without departing from the scope of the present invention, comprising all equivalent embodiments for an expert in the art.

From the above description, an expert in the art is able to implement the subject of the invention without introducing further constructional details. All the elements and characteristics shown in the various preferred embodiments, including the drawings, can be combined with one another without leaving the scope of this patent application. That described in the section regarding the state of the art is only for a better understanding of the invention and does not represent a statement on the existence of that described. Moreover, unless specifically excluded in the detailed description, that specified in the state of the art section is to be considered an integral part of the detailed description.

## Claims

1. A method for digital identity generation and authentication comprising the following procedures:
+ generating and assigning a digital identity to a user, comprising the following steps in succession:
- (Step 1) simultaneously assigning on a user device a plurality of public/private key pairs to said user;
- (Step 2) constructing on the user device a Merkle tree having at least said plurality of public keys as elements of a related bottom level;
- (Step 3) computing on the user device a hash set (H) in which each item corresponds to each of the nodes of said Merkle tree, including a related first Merkle root (Z);
- (Step 4) storing, by a verification authority, said Merkle root (Z) together with a data set related to said user, wherein said data set includes a hash of a concatenation of two or more items of identification data of said user (HASHDATA) ;
+ verification of said digital identity, comprising the following steps in succession:
- (Step 5) encrypting on the user device predetermined data with a first private key of said plurality of pairs;
- (Step 6) selecting on the user device a hash subset (G) corresponding to the nodes of said Merkle tree complementary to a first public key corresponding to said first private key;
- (Step 7) computing by said verification authority a second Merkle root from said hash subset (G) and from said first public key;
- (Step 8) verifying, by said verification authority, that said first Merkle root coincides with said second Merkle root and checking whether the previously encrypted data is effectively decrypted by the complementary first public key supplied by the user and
- (Step 10) verifying the related content,
wherein said first private key is replaced by a second private key belonging to said plurality of pairs to perform a further encryption operation, wherein the Merkle tree also has alphanumeric strings as elements of a related bottom level to increase the size of the said Merkle tree.

2. The method according to claim 1, wherein said alphanumeric strings are alternated with said public keys of said plurality of pairs.

3. The method according to claim 2, wherein said alternation is random.

4. The method according to any of the preceding claims 1 - 3, wherein said predetermined data consists of:
- a predetermined alphanumeric string when authentication is intended for establishing secure communication on a secure Web platform;
- an electronic document when authentication is intended for the digital signing of said electronic document.

5. The method according to any of the preceding claims, wherein said step (Step 6) of selecting said hash subset (G) comprises a procedure of concatenating, to each selected hash, an alphanumeric value indicating a respective concatenation position of said each selected hash in the calculation of said second Merkle root.

6. A data processing system comprising means for carrying out the steps of the method of claims 1-5.

## Patentansprüche

1. Verfahren zur Erzeugung und Authentifizierung einer digitalen Identität, das die folgenden Schritte umfasst:
+ Generierung und Zuweisung einer digitalen Identität an einen Benutzer, einschließlich der folgenden Schritte nacheinander:
- (Schritt 1) gleichzeitige Zuweisung einer Vielzahl von öffentlichen/privaten Codepaaren an den Benutzer auf einer Vorrichtung des Benutzers;
- (Schritt 2) Bildung von einem Merkle-Baum auf der Vorrichtung des Benutzers mit mindestens der Vielzahl von öffentlichen Codes als Elemente einer relativen Grundstufe;
- (Schritt 3) Berechnung eines Hash-Sets (H) auf der Vorrichtung des Benutzers, wobei jeder Eintrag jedem der Knoten des Merkle-Baums, einschließlich einer relativen ersten Merkle-Wurzel (Z), entspricht;
- (Schritt 4) Speichern der Merkle-Wurzel (Z) mittels einer Überprüfungsbehörde zusammen mit einer Reihe von Daten, die sich auf den Benutzer beziehen, wobei die Reihe von Daten umfasst einen Hash einer Verkettung von zwei oder mehr Einträgen von Identifikationsdaten des Benutzers (HASHDATA);
+ Überprüfung der digitalen Identität, einschließlich der folgenden Schritte nacheinander:
- (Schritt 5) Codierung von vorbestimmten Daten in der Vorrichtung des Benutzers mit einem ersten privaten Code der Vielzahl von Paaren;
- (Schritt 6) Auswahl einer Hash-Teilmenge (G) auf der Vorrichtung des Benutzers, die den Knoten des Merkle-Baums entspricht und komplementär zu einem ersten öffentlichen Code ist, der dem ersten privaten Code entspricht;
- (Schritt 7) Berechnung einer zweiten Merkle-Wurzel aus der Hash-Teilmenge (G) und aus dem ersten öffentlichen Code durch die Überprüfungsbehörde;
- (Schritt 8) Überprüfung durch die Überprüfungsbehörde, ob die erste Merkle-Wurzel mit der zweiten Merkle-Wurzel übereinstimmt, und Prüfung, ob die zuvor codierten Daten tatsächlich durch den ersten ergänzenden öffentlichen Code entschlüsselt wurden, die vom Benutzer bereitgestellt worden sind, und
- (Schritt 10) Überprüfung des relativen Inhalts, wobei der erste private Code durch einen zweiten privaten Code ersetzt wird, der zu der Vielzahl von Paaren gehört, um eine weitere Registrierungsoperation durchzuführen, wobei der Merkle-Baum auch alphanumerische Streifen als Elemente eines relativen Grundniveaus aufweist, um die Größe des Merkle-Baumes zu erhöhen.

2. Verfahren nach Anspruch 1, wobei die alphanumerischen Streifen mit den öffentlichen Codes der mehreren Paare abgewechselt werden.

3. Verfahren nach Anspruch 2, wobei der Wechsel zufällig ist.

4. Verfahren nach einem der vorhergehenden Ansprüche 1-3, wobei die genannten vorbestimmten Daten, wie folgt aus gebildet sind:
- einem vorgegebenen alphanumerischen Streifen für den Fall, dass eine Authentifizierung den Zweck hat, eine sichere Kommunikation auf einer sicheren Webplattform herzustellen;
- einem elektronischen Dokument für den Fall, dass eine Authentifizierung den Zweck hat, das elektronische Dokument digital zu signieren.

5. Verfahren nach einem der vorhergehenden Ansprüche, wobei der Schritt (Schritt 6) zum Auswählen der Hash-Teilmenge (G) eine Verkettungsprozedur für jeden ausgewählten Hash eines alphanumerischen Werts umfasst, der eine jeweilige Verkettungsposition jedes gewählten Hash bei der Berechnung der genannten zweiten Merkle-Wurzel, angibt.

6. Datenverarbeitungssystem, umfassend Mittel zum Ausführen der Schritte des Verfahrens nach den Ansprüchen 1 bis 5.

## Revendications

1. Procédé de génération et d'authentification d'une identité numérique comprenant les procédures suivantes:
+ génération et attribution d'une identité numérique à un utilisateur, comprenant successivement les opérations suivantes:
- (opération 1) attribution simultanée sur un dispositif d'un utilisateur d'une pluralité de paires de codes public/privé audit utilisateur;
- (opération 2) construction sur le dispositif de l'utilisateur d'un arbre de Merkle comportant au moins ladite pluralité de codes publics comme éléments d'un niveau de fond relatif;
- (opération 3) calcul sur le dispositif de l'utilisateur d'un ensemble de hashage (H) dans lequel chaque entrée correspond à chacun des nœuds dudit arbre de Merkle, comprenant une première racine de Merkle relative (Z);
- (opération 4) stockage, au moyen d'une autorité de vérification, de ladite racine de Merkle (Z) avec une série de données relatives audit utilisateur, dans laquelle ladite série de données comprend un hachage d'une concaténation de deux ou plus entrées de données d'identification dudit utilisateur (HASHDATA);
+ vérification de ladite identité numérique, comprenant successivement les opérations suivantes:
- (opération 5) incorporation sur les données prédéterminées du dispositif de l'utilisateur d'un premier code privé de ladite pluralité de paires;
- (opération 6) sélection sur le dispositif de l'utilisateur d'un sous-ensemble de hachage (G) correspondant aux nœuds dudit arbre de Merkle, complémentaire d'un premier code public correspondant audit premier code privé;
- (opération 7) calcul par ladite autorité de vérification d'une deuxième racine de Merkle à partir dudit sous-ensemble de hachage (G) et dudit premier code public;
- (opération 8) vérification, par ladite autorité de vérification, que ladite première racine de Merkle coïncide avec ladite deuxième racine de Merkle, et contrôle si les données précédemment enregistrées sont effectivement décryptées par le premier code public complémentaire fourni par l'utilisateur et
- (opération 10) vérification du contenu relatif, dans lequel ledit premier code privé est remplacé par un deuxième code privé appartenant à ladite pluralité de paires, de manière à effectuer une autre opération d'enregistrement, dans laquelle l'arbre de Merkle a également des bandes alphanumériques comme éléments d'un niveau de fond relatif afin d'augmenter la taille dudit arbre de Merkle.

2. Procédé selon la revendication 1, dans lequel lesdites chaînes alphanumériques sont alternées avec lesdits codes publics de ladite pluralité de paires.

3. Procédé selon la revendication 2, dans lequel ladite alternance est aléatoire.

4. Procédé selon l'une des revendications précédentes 1-3, dans lequel lesdites données prédéterminées sont formées par:
- une bande alphanumérique prédéterminée dans le cas où une authentification a pour but d'établir une communication sécurisée sur une plateforme web sécurisée;
- un document électronique dans le cas où une authentification a pour but de signer numériquement ledit document électronique.

5. Procédé selon l'une des revendications précédentes, dans lequel ladite opération (opération 6) pour sélectionner ledit sous-ensemble de hachage (G) comprend une procédure de concaténation, pour chaque hachage sélectionné, d'une valeur alphanumérique qui indique une position de concaténation respective dudit hachage, choisi dans le calcul de ladite deuxième racine de Merkle.

6. Système de traitement de données comprenant des moyens pour exécuter les opérations du procédé des revendications 1 à 5.
